# EUROPÄISCHE PATENTSCHRIFT

(11) **EP 0 936 438 B1**
(45) Veröffentlichungstag und Bekanntmachung des Hinweises auf die Patenterteilung: **04.08.2004**
(21) Anmeldenummer: 98122279.7
(22) Anmeldetag: 24.11.1998
(51) Int. Cl.: G01B 7/00

(54) **Positionserfassungsvorrichtung**
Position determination device
Dispositif de determination de la position

(30) Priorität: 10.02.1998 DE 19805225
(43) Veröffentlichungstag der Anmeldung: 18.08.1999
(73) Patentinhaber: FESTO AG & Co, 73734 Esslingen (DE)
(72) Erfinder: Stoll, Kurt Dr., 73732 Esslingen (DE); Reininger, Thomas Dr., 73249 Wernau (DE); Jauch, Michael, 72622 Nürtingen (DE); Feyrer, Thomas, 73732 Esslingen (DE)
(74) Vertreter: Abel, Martin, Dipl.-Ing.

(56) Entgegenhaltungen:
- WO-A-90/09563
- DE-A- 2 014 454
- DE-A- 3 442 879
- DE-A- 3 738 151
- DE-A- 4 116 651
- DE-A- 4 333 800
- US-A- 3 687 483
- US-A- 4 810 965
- US-A- 5 257 014
- US-A- 5 621 317
- PATENT ABSTRACTS OF JAPAN vol. 016, no. 454 (P-1425), 21. September 1992 (1992-09-21) & JP 04 160315 A (FUJITSU LTD), 3. Juni 1992 (1992-06-03)

## Beschreibung

Die vorliegende Erfindung betrifft eine Positionserfassungsvorrichtung zur Erfassung wenigstens einer Relativposition zweier Körper, mit wenigstens einem ortsfest bezüglich des einen Körpers angeordneten Sensor, der bei in der zu erfassenden Relativposition befindlichen Körpern durch das Magnetfeld eines Magneten betätigt wird, wobei mindestens ein Feldbeeinflussungsteil vorgesehen ist, wobei das Feldbeeinflussungsteil und der Magnet relativ zueinander bewegbar sind und durch die Relativbewegung der beiden Körper zwischen einer nichtschaltenden und einer schaltenden Relativposition verlagerbar sind, wobei das Feldbeeinflussungsteil in der nichtschaltenden Relativposition zumindest teilweise zwischen dem Sensor und dem Magneten angeordnet ist und derart im Magnetfeld des Magneten angeordnet ist, dass die Feldstärke des Magnetfeldes im Bereich des Sensors unter einen dessen Betätigung hervorrufenden Schaltwert herabgesetzt ist, während es in der schaltenden Relativposition im Bereich des Sensors eine mindestens dem Schaltwert entsprechende Feldstärke zulässt.

Bei einer aus der DE-PS 2014454 bekannten Positionserfassungsvorrichtung ist der Magnet an einem der Körper und der Sensor am jeweils anderen Körper befestigt. Bei einer Relativbewegung der beiden Körper bewegen sich daher Sensor und Magnet ebenfalls relativ zueinander, wobei der Sensor betätigt wird, wenn auf ihn das Magnetfeld des Magneten mit einer gewissen Feldstärke einwirkt. Der Sensor sollte derart relativ zum Magneten positioniert sein, dass er in der zu erfassenden Relativposition der beiden Körper betätigt wird. Hierbei ergeben sich Probleme, da das Magnetfeld des Magneten eine gewisse Streuung aufweist, so dass es bei einer Relativbewegung der beiden Körper zu Mehrfachbetätigungen des Sensors kommen kann, wodurch eine eindeutige Erfassung der betreffenden Relativposition der beiden Körper erschwert wird.

Aus der DE 34 42 879 A1 ist eine Positionserfassungsvorrichtung für ein Federbein eines Fahrzeugs bekannt. An einer ortsfesten Seite eines Staubschutzelementes sind entlang einer Bewegungsbahn eines Stoßdämpfers abwechselnd Permanentmagneten und Hallsensoren angeordnet. Ein als Feldbeeinflussungsteil dienender, am beweglichen Stoßdämpfer angeordneter Metallstreifen leitet ein Magnetfeld von jeweils einem Permanentmagneten zur jeweils einem Hallsensor, so dass der jeweils aktivierte Hallsensor die Position des Stoßdämpfers signalisiert. Der Metallstreifen dient zum Leiten eines Magnetfelds, nicht zu dessen Abschirmung.

Bei einer aus der DE 37 38 151 A1 bekannten Kolben-Positionserfassungsvorrichtung ist ein Permanentmagnet an einem Kolben befestigt, der in einem nichtmagnetischen Zylinder beweglich aufgenommen ist. Außen am Zylinder ist ein Sensor zur Erfassung des vom Permanentmagneten ausgehenden magnetischen Feldes angeordnet. Innerhalb des Sensors ist ein blattförmiges magnetisches Feldbeeinflussungsteil angeordnet, das dann, wenn sich Permanentmagnet und Sensor gegenüberstehen, durch einen Teil des vom Permanentmagneten ausgehenden Magnetflusses magnetisch gesättigt ist, so dass die auf das Sensorelement des Sensors wirkende Magnetflussdichte dazu ausreicht, um elektrische Detektorsignale zu erzeugen. Wenn sich Sensor und Permanentmagnet nicht gegenüberstehen, verringert das Feldbeeinflussungsteil den auf das Sensorelement wirkenden Anteil des magnetischen Flusses unter einen dessen Betätigung hervorrufenden Schaltwert. Das Feldbeeinflussungsteil ist blattförmig. Es befindet sich in der schaltenden Relativposition zwischen dem Magneten und dem Sensor.

Es ist daher die Aufgabe der vorliegenden Erfindung, eine Positionserfassungsvorrichtung der eingangs genannten Art zu schaffen, die bei einfachem Aufbau ein sicheres Erfassen der betreffenden Relativposition der beiden Körper gewährleistet.

Diese Aufgabe wird erfindungsgemäß dadurch gelöst, dass das Feldbeeinflussungsteil ein hülsenähnliches Abschirmteil darstellt, das den Magneten in der nichtschaltenden Relativposition umgibt. Eine derartige Anordnung ermöglicht auf einfache Weise eine starke Herabsetzung der Feldstärke im Bereich des Sensors.

Aufgrund des Feldbeeinflussungsteils ist es möglich, das Magnetfeld derart zu beeinflussen, dass eine Betätigung des Sensors bei außerhalb der zu erfassenden Relativposition befindlichen Körpern aufgrund von Streuungen des Magnetfeldes vermieden ist. Erst in der schaltenden Relativposition von Feldbeeinflussungsteil und Magnet ermöglicht eine im Bereich des Sensors ausreichend große Feldstärke des Magnetfeldes eine Betätigung des Sensors. Auf diese Weise ist sichergestellt, dass die Betätigung des Sensors nur in der zugeordneten, zu erfassenden Relativposition der beiden Körper erfolgt. Insbesondere bei geringen Relativbewegungen der beiden Körper kann bei der erfindungsgemäßen Positionserfassungseinrichtung noch eine Unterscheidung zwischen der zu erfassenden Relativposition und den anderen Relativpositionen erfolgen, wohingegen bei den bisher bekannten Positionserfassungsvorrichtungen aufgrund der dort vorliegenden geringfügigen Änderung der Feldstärke bei einer kurzen Relativbewegung der beiden Körper keine exakte Erfassung der betreffenden Relativposition möglich ist.

Zwar geht aus dem deutschen Patent 20 14 454 hervor, dass ein sich aufgrund der Relativbewegung zweier Körper veränderndes Magnetfeld eines Magneten mittels einer Sensoreinrichtung detektierbar ist, jedoch wird dort die Relativgeschwindigkeit der beiden Körper erfasst, wobei keine Möglichkeit zur Erfassung der Relativposition der beiden Körper vorgesehen ist.

Vorteilhafte Weiterbildungen des Gegenstands der Erfindung gehen aus den abhängigen Ansprüchen hervor.

Zweckmäßigerweise ist das Feldbeeinflussungsteil magnetisierbar und besteht insbesondere aus ferromagnetischem Material. Dadurch kann das Magnetfeld des Magneten besonders gut beeinflusst werden.

Vorteilhafterweise ist das Feldbeeinflussungsteil zumindest beim Übergang zwischen der nichtschaltenden und der schaltenden Relativposition mit einem der Körper bewegungsgekoppelt. Ebenso könnte zusätzlich oder alternativ der Magnet zumindest beim Übergang zwischen der nichtschaltenden und der schaltenden Relativposition mit einem der Körper bewegungsgekoppelt sein. Hierdurch kann ein Umschalten zwischen der schaltenden und der nichtschaltenden Relativposition aufgrund der Relativbewegung der beiden Körper erreicht werden.

Es ist des weiteren zweckmäßig, wenn das Feldbeeinflussungsteil und/oder der Magnet ortsfest an jeweils einem der beiden Körper angeordnet sind bzw. ist. Dabei wird bei einer Relativbewegung der beiden Körper gleichzeitig eine Relativbewegung zwischen dem Feldbeeinflussungsteil und dem Magneten hervorgerufen.

Bei einer weiteren vorteilhaften Ausgestaltung ist der Magnet ortsfest bezüglich des Sensors angeordnet. Hierdurch kann der Sensor optimal im unbeeinflussten Magnetfeld des Magneten positioniert werden.

Alternativ hierzu ist es ebenfalls möglich, das Feldbeeinflussungsteil ortsfest bezüglich des Sensors anzuordnen. Aufgrund dieser Maßnahme werden Streuungen des Magnetfeldes im Bereich des Sensors durch das Feldbeeinflussungsteil auf besonders einfache Weise so beeinflusst, dass in der nichtschaltenden Relativposition keine Betätigung des Sensors erfolgt.

Des weiteren ist es zweckmäßig, wenn das hülsenähnliche, abschirmende Feldbeeinflussungsteil den Magneten in der nichtschaltenden Relativposition koaxial zur Bewegungsrichtung der Relativbewegung umgibt.

Es ist weiterhin vorteilhaft, wenn der eine Körper vom Gehäuse und der andere Körper vom relativ zum Gehäuse bewegbaren Antriebsteil einer Antriebseinrichtung, beispielsweise eines fluidbetätigten Arbeitszylinders, gebildet ist. Hierdurch besteht die Möglichkeit die Position des Antriebsteils relativ zum Gehäuse mit einer guten Genauigkeit zu bestimmen. Beispielsweise kann es sich bei der wenigstens einen zu erfassenden Relativposition der beiden Körper um eine Endlage des Antriebsteiles bezüglich des Gehäuses handeln.

Alternativ hierzu könnte der eine Körper vom Gehäuse und der andere Körper von einem Betätigungsstößel einer Stoßdämpfereinrichtung gebildet sein. Auch hier kann die zu erfassende Relativposition des Betätigungsstößels bezüglich des Gehäuses exakt und sicher erfasst werden.

Bei einer weiteren zweckmäßigen Ausgestaltung ist der Sensor außen am Gehäuse angeordnet, so dass er jederzeit justierbar oder auch austauschbar ist, falls dies z.B. aufgrund von Reparaturmaßnahmen notwendig sein sollte.

Im folgenden wird die erfindungsgemäße Vorrichtung anhand der Zeichnung näher erläutert. Es zeigen:
- Figur 1: eine Stoßdämpfereinrichtung mit einem ersten Ausführungsbeispiel der Positionserfassungsvorrichtung im Schrägbild in teilgeschnittener Darstellung,
- Figur 2: die Stoßdämpfereinrichtung mit Positionserfassungsvorrichtung gemäß Figur 1 in schematischer, teilgeschnittener Seitenansicht, wobei sich das Feldbeeinflussungsteil und der Magnet der Positionserfassungsvorrichtung in der nichtschaltenden Relativposition befinden,
- Figur 3: die Anordnung gemäß Figur 2, wobei sich das Feldbeeinflussungsteil und der Magnet der Positionserfassungsvorrichtung in der schaltenden Relativposition befinden,
- Figur 4: die Stoßdämpfereinrichtung gemäß Figuren 1 bis 3 mit einem zweiten, nicht beanspruchten Ausführungsbeispiel der Positionserfassungsvorrichtung in einer schematischen, teilgeschnittenen Seitenansicht, wobei sich das Feldbeeinflussungsteil und der Magnet der Positionserfassungsvorrichtung in der nichtschaltenden Relativposition befinden und
- Figur 5: die Anordnung gemäß Figur 4, wobei sich das Feldbeeinflussungsteil und der Magnet der Positionserfassungsvorrichtung in der schaltenden Relativposition befinden.

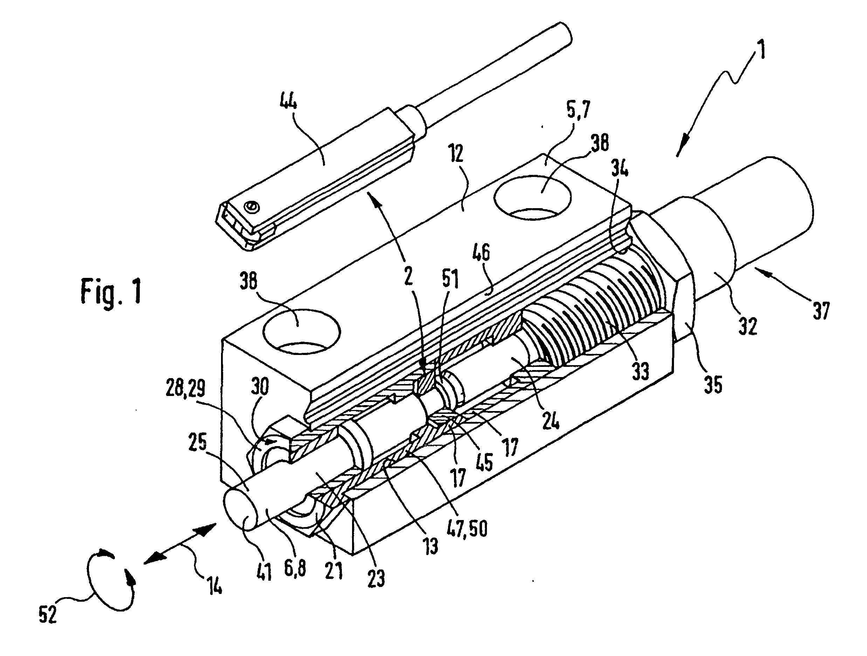

In Figur 1 ist ein Ausführungsbeispiel einer Stoßdämpfereinrichtung 1 dargestellt, die mit einer ersten Ausführungsform einer Positionserfassungsvorrichtung 2 versehen ist. Die Stoßdämpfereinrichtung 1 weist ein Gehäuse 5 und einen relativ zum Gehäuse 5 bewegbaren Betätigungsstößel 6 auf, wobei das Gehäuse 5 einen ersten Körper 7 und der Betätigungsstößel 6 einen zweiten Körper 8 bilden.

Die Positionserfassungsvorrichtung 2 dient zur Erfassung wenigstens einer Relativposition der beiden Körper 7, 8. Es versteht sich, daß die Positionserfassungsvorrichtung 2 nicht nur wie im vorliegenden Fall dargestellt bei einer Stoßdämpfereinrichtung 1 eingesetzt werden kann, sondern immer dann, wenn eine oder mehrere Relativpositionen zweier Körper 7, 8 erfaßt werden sollen. Beispielsweise könnte der erste Körper 7 vom Gehäuse und der zweite Körper 8 vom relativ zum Gehäuse bewegbaren Antriebsteil einer Antriebseinrichtung gebildet sein, wobei als Antriebseinrichtung ein fluidbetätigter Arbeitszylinder, ein elektrischer Antrieb, ein Drehantrieb oder ähnliches in Frage kommt.

Die beispielsgemäße Stoßdämpfereinrichtung 1 wird üblicherweise sozusagen als Dämpfungsanschlag verwendet, wobei ein beliebiges, strichpunktiert schematisch dargestelltes bewegtes Teil 9 in der Endphase seiner Bewegung dämpfend abgebremst wird bis es an einem Anschlag auftrifft, so daß es eine definierte Endposition einnimmt. Beispielsweise könnte es sich bei einem bewegten Teil 9 um das Antriebsteil oder damit verbundene Abtriebsteile einer insbesondere kolbenstangenlosen, fluidbetätigten Antriebseinrichtung handeln, wobei vor allem die Abtriebsteile mittels einer jeweiligen Stoßdämpfereinrichtung 1 in ihren Endlagen dämpfend abgebremst werden, um hohe Materialbeanspruchungen der Antriebseinrichtung zu vermeiden. Eine solche Antriebseinrichtung kann beispielsweise ein an sich bekannter sogenannter Schlitzzylinder sein.

Das Gehäuse 5 der Stoßdämpfereinrichtung 1 verfügt über ein erstes Gehäuseteil 12, das eine Längsausnehmung 13 aufweist, die der Lagerung des in Längsrichtung 14 hin und her verschiebbaren Betätigungsstößels 6 dient. Somit ist im vorliegenden Fall der zweite Körper 8 in der Längsausnehmung 13 des ersten Körpers 7 relativ zu diesem in Längsrichtung 14 bewegbar gelagert.

Die Längsausnehmung 13 ist beim bevorzugten Ausführungsbeispiel zylinderähnlich konturiert, wobei koaxial zur Längsausnehmung 13 eine Führungshülse 17 vorgesehen ist, deren Innenseite eine Führungsfläche 18 aufweist, an der der Betätigungsstößel 6 geführt anliegt. Es versteht sich, daß der Betätigungsstößel 6 alternativ zu den gezeigten Ausführungsbeispielen der Stoßdämpfereinrichtung 1 auch direkt an der Mantelfläche der Längsausnehmung 13 geführt sein könnte oder daß in der Längsausnehmung 13 eine Führungseinrichtung vorgesehen ist, über die der Betätigungsstößel 6 geführt verschiebbar gelagert ist.

Der Betätigungsstößel 6 weist beispielsgemäß einen Führungsabschnitt 21 auf, dessen Außendurchmesser im wesentlichen dem Innendurchmesser der Führungshülse 17 entspricht, wobei der Führungsabschnitt 21 an seinem Außenumfang wenigstens einen Führungsring 22 trägt, der zusammen mit der ihm zugewandten Führungsfläche 18 der Führungshülse 17 einen Gleitsitz bildet.

Der Betätigungsstößel 6 ist im vorliegenden Fall in ein erstes Stößelelement 23 und ein zweites Stößelelement 24 unterteilt, die axial aufeinanderfolgend angeordnet sind. Das erste Stößelelement 23 verfügt über einen in Längsrichtung 14 aus der Längsausnehmung 13 herausragenden Betätigungsabschnitt 25, der mit dem bewegten Teil 9 zusammenarbeitet, dessen Bewegung durch die Stoßdämpfereinrichtung 1 gedämpft abgebremst werden soll.

Die Längsausnehmung 13 ist durch ein am Gehäuse 5 im Bereich des Betätigungsabschnitts 25 des Betätigungsstößels 6 vorgesehenes Befestigungselement 28 zumindest teilweise abgeschlossen, das beim Ausführungsbeispiel zum Befestigen der Führungshülse 17 in der Längsausnehmung 13 dient. Das Befestigungselement 28 kann, wie dies in Figur 1 dargestellt ist, schraubenmutterähnlich ausgebildet sein. Es stellt beim bevorzugten Ausführungsbeispiel gleichzeitig einen Anschlagkörper 29 dar, der die zugehörige Endlage des durch die Stoßdämpfereinrichtung 1 abzubremsenden bewegten Teiles 9 definiert, wobei das bewegte Teil 9 in der Endlage an einer ihm zugewandten Anschlagfläche 30 des Anschlagkörpers 29 anliegt. Es versteht sich, daß der Anschlagkörper 29 alternativ hierzu eine beliebige andere Gestalt aufweisen könnte und auch separat von der Stoßdämpfereinrichtung 1 angeordnet sein könnte.

Das zweite Stößelelement 24 des Betätigungsstößels 6 ist zumindest mit seinem dem ersten Stößelelement 23 axial entgegengesetzten Endabschnitt in einem zweiten Gehäuseteil 32 des Gehäuses 5 längsverschiebbar angeordnet. Das zweite Gehäuseteil 32 verfügt über eine zum lösbaren Verbinden der beiden Gehäuseteile 32, 12 dienende Befestigungspartie 33, die beispielsgemäß mit einem Außengewinde versehen ist und in den dem Betätigungsabschnitt 25 des Betätigungsstößels 6 entgegengesetzten, mit einem entsprechend komplementären Innengewinde versehenen Endbereich 34 der Längsausnehmung 13 eingeschraubt ist. Über eine Sicherungsmutter 35 ist die gewählte Einschraubtiefe des zweiten Gehäuseteils 32 fixierbar. Selbstverständlich könnte das zweite Gehäuseteil 32 alternativ zum bevorzugten Ausführungsbeispiel auch außen am ersten Gehäuseteil 12 in axialer Verlängerung der Längsausnehmung 13 beispielsweise durch Anschrauben befestigt sein, wobei die Verbindung auch durch eine sonstige beliebige Art hergestellt werden kann.

Zweckmäßigerweise sind die beiden Stößelelemente 23, 24 z.B. lösbar miteinander verbunden, beispielsweise mittels einer Schnappverbindung. Es wäre ebenfalls denkbar, die beiden Stößelelemente 23, 24 einstückig auszuführen.

Beispielsgemäß bilden das zweite Gehäuseteil 32 des Gehäuses 5 und das zweite Stößelelement 24 des Betätigungsstößels 6 eine gemeinsam handhabbare Baueinheit, die sozusagen den eigentlichen Stoßdämpfer 37 der Stoßdämpfereinrichtung 1 darstellt. Vorteil dieser Baueinheit ist es, daß sie im Bedarfsfall austauschbar ist. Aufgrund der einstellbaren Einschraubtiefe des zweiten Gehäuseteils 32 in der Längsausnehmung 13 des ersten Gehäuseteils 12 kann desweiteren der maximale Hub des Betätigungsstößels 6 bzw. des Stoßdämpfers 37 variiert werden.

Innerhalb des zweiten Gehäuseteils 32 ist in an sich bekannter Weise eine mit Fluid gefüllte Dämpfungskammer vorgesehen, in der ein mit dem zweiten Stößelelement 24 verbundener Verdrängungskörper angeordnet ist, was in der Zeichnung nicht näher gezeigt ist. In der Ruhestellung befindet sich der Betätigungsstößel 6 der Stoßdämpfereinrichtung 1 in seiner ausgefahrenen Position, so daß der Betätigungsabschnitt 25 des Betätigungsstößels 6 aus dem Gehäuse 5 herausragt. Wird der Betätigungsabschnitt 25 durch ein bewegtes Teil 9, wie beispielsweise ein Werkzeugschlitten oder eine sonstige bewegte Last, axial in Längsrichtung 14 in das Gehäuse 5 bzw. in die Längsausnehmung 13 hineinbewegt, so führt der Verdrängungskörper in der Dämpfungskammer ebenfalls eine axiale Bewegung aus, wobei er das darin befindliche Fluid verdrängen muß, so daß er eine Arbeit verrichtet. Hierdurch wird die kinetische Energie des bewegten Teiles 9 reduziert, so daß es abgebremst wird.

Bei dem in Figur 1 dargestellten Ausführungsbeispiel der Stoßdämpfereinrichtung 1 sind am ersten Gehäuseteil 12 Befestigungsmittel 38 vorgesehen, die zum Anbringen der Stoßdämpfereinrichtung 1 an einem beliebigen Halteteil dienen. Beispielsweise kann die Stoßdämpfereinrichtung 1 an einer Werkzeugmaschine, an einer fluidischen oder elektrischen Antriebseinrichtung, an einem Fluidzylinder oder ähnlichem befestigt werden.

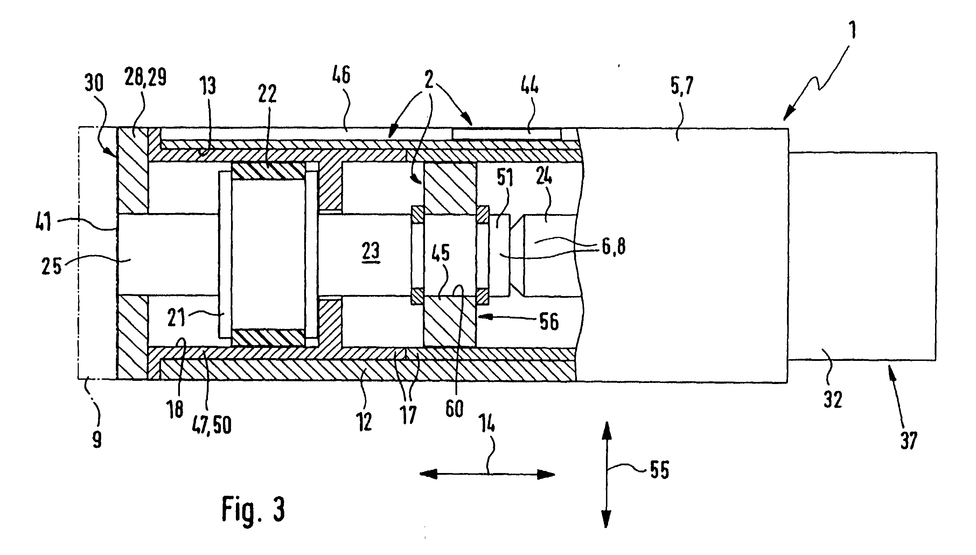

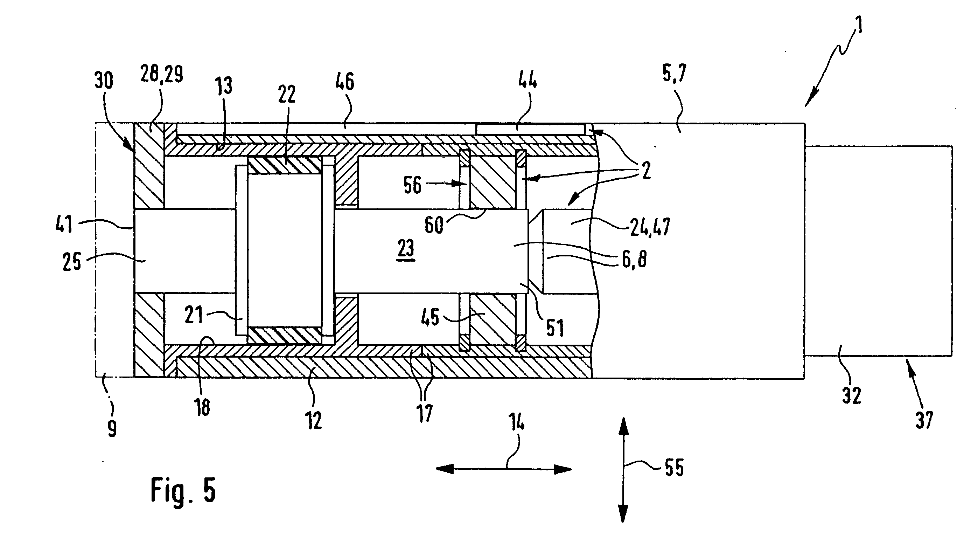

Wie bereits erwähnt, dient die Positionserfassungsvorrichtung 2 dazu, eine oder mehrere Relativpositionen der beiden vom Gehäuse 5 und vom Betätigungsstößel 6 gebildeten Körper 7, 8 zu erfassen. Im Falle der beispielsgemäßen Stoßdämpfereinrichtung 1 ist die zu erfassende Relativposition der beiden Körper 7, 8 von der vollständig eingeschobenen Endlage des Betätigungsstößels 6 bezüglich des Gehäuses 5 gebildet, wie dies in den Figuren 3 und 5 dargestellt ist. Das freie äußere Ende 41 ist dabei im wesentlichen bündig mit der Anschlagfläche 30. In dieser Position liegt das bewegte Teil 9 an der Anschlagfläche 30 des Anschlagkörpers 29 an, so daß sich die beiden Körper 7, 8 genau dann in ihrer zu erfassenden Relativposition befinden, wenn das bewegte Teil die am Anschlagkörper 29 anliegende definierte Endlage einnimmt. Auf diese Weise erfüllt die Stoßdämpfereinrichtung 1 gleichzeitig zwei Aufgaben, nämlich die Dämpfung bzw. das Abbremsen des bewegten Teiles in der Endphase seiner Bewegung und die Erfassung der Endlage des bewegten Teiles über die Erfassung der Relativposition der beiden Körper 7, 8.

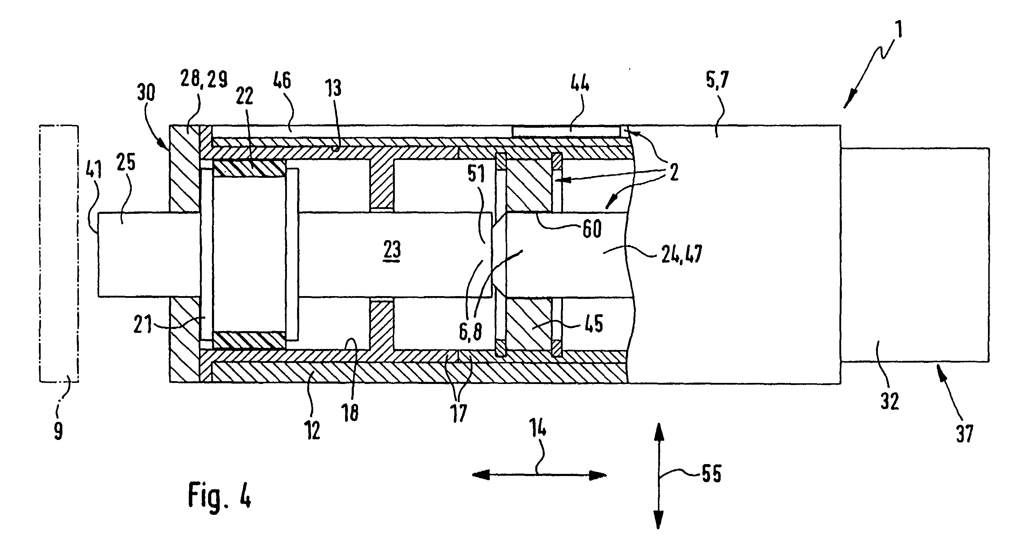

Die Positionserfassungsvorrichtung 2 verfügt über einen ortsfest am ersten Körper 7 angeordneten Sensor 44, der bei in der zu erfassenden Relativposition befindlichen Körpern 7, 8 durch das Magnetfeld eines Magneten 45, der beispielsgemäß als Permanentmagnet ausgeführt ist, betätigt wird. Der Magnet 45 ist beim ersten Ausführungsbeispiel der Positionserfassungsvorrichtung 2 gemäß der Figuren 1 bis 3 mit dem vom Betätigungsstößel 6 gebildeten zweiten Körper 8 bewegungsgekoppelt, wobei er beispielsgemäß ortsfest am zweiten Körper 8 befestigt ist. Alternativ hierzu ist der Magnet beim zweiten Ausführungsbeispiel gemäß der Figuren 4 und 5 ortsfest am vom Gehäuse 5 gebildeten ersten Körper 7 befestigt, so daß er hierbei gleichzeitig ortsfest bezüglich des Sensors 44 angeordnet ist.

Der Sensor 44 ist außen am Gehäuse 5 in einer Nut 46 in Längsrichtung 14 verlagerbar und festlegbar angeordnet, so daß er entsprechend der zu erfassenden Relativposition durch eine Längsverschiebung in der Nut 46 justierbar ist. Es versteht sich, daß in einer weiteren Ausführungsform auch mehrere Sensoren 44 vorgesehen sein könnten, z.B. um mehrere Relativpositionen der beiden Körper 7, 8 zu erfassen. Es kann hierbei zweckmäßig sein, mehrere Nuten 46 am Gehäuse 5 vorzusehen, so daß ein ungehindertes Positionieren der Sensoren 44 in Längsrichtung 14 möglich ist.

Die Positionserfassungsvorrichtung 2 weist desweiteren ein relativ zum Magneten 45 bewegbares Feldbeeinflussungsteil 47 auf. Das Feldbeeinflussungsteil 47 ist zur Beeinflussung des Magnetfeldes des Magneten 45 vorgesehen und besteht beim Ausführungsbeispiel aus magnetisierbarem, beispielsweise ferromagnetischem Material.

Durch die Relativbewegung der beiden Körper 7, 8 sind das Feldbeeinflussungsteil 47 und der Magnet 45 zwischen einer nichtschaltenden und einer schaltenden Relativposition verlagerbar, wobei das Feldbeeinflussungsteil 47 in der nichtschaltenden Relativposition derart im Magnetfeld des Magneten 45 angeordnet ist, daß die Feldstärke des Magnetfeldes im Bereich des Sensors 44 unter einen dessen Betätigung hervorrufenden Schaltwert herabgesetzt ist. Im Gegensatz dazu läßt das Feldbeeinflussungsteil 47 in der schaltenden Relativposition im Bereich des Sensors 44 eine mindestens dem Schaltwert entsprechende Feldstärke zu, so daß eine Betätigung des Sensors 44 erfolgen kann.

Im folgenden wird nun das erste Ausführungsbeispiel der Positionserfassungsvorrichtung 2 gemäß Figuren 1 bis 3 am Beispiel der Stoßdämpfereinrichtung 1 näher erläutert.

Das Feldbeeinflussungsteil 47 ist hier von einem Längenabschnitt der Führungshülse 17 gebildet, so daß es ortsfest bezüglich des vom Gehäuse 5 gebildeten ersten Körpers 7 und bezüglich des am Gehäuse 5 vorgesehenen Sensors 44 angeordnet ist. Es besteht alternativ hierzu auch die Möglichkeit, das hülsenähnliche Feldbeeinflussungsteil 47 separat zur Führungshülse 17 auszubilden und am Gehäuse 5 anzuordnen oder als Bestandteil des Gehäuses 5 auszuführen.

Der am Betätigungsstößel 6 angeordnete Magnet 45 ist vorzugsweise als Ringmagnet ausgeführt und koaxial zum ersten Stößelelement 23 des Betätigungsstößels 6 angeordnet. Er sitzt zweckmäßigerweise an dem dem Betätigungsabschnitt 25 entgegengesetzten Endbereich 51 des ersten Stößelelementes 23.

Das hülsenähnliche Feldbeeinflussungsteil 47 ist derart an der Innenseite des Gehäuses 5 angeordnet, daß es das erste Stößelelement 23 in Umfangsrichtung 52 koaxial umgibt, wobei es beispielsgemäß koaxial zur Bewegungsrichtung der Relativbewegung vorgesehen ist. Die Längsausdehnung des Feldbeeinflussungsteils 47 ist dabei geringer als die des ersten Stößelelements 23.

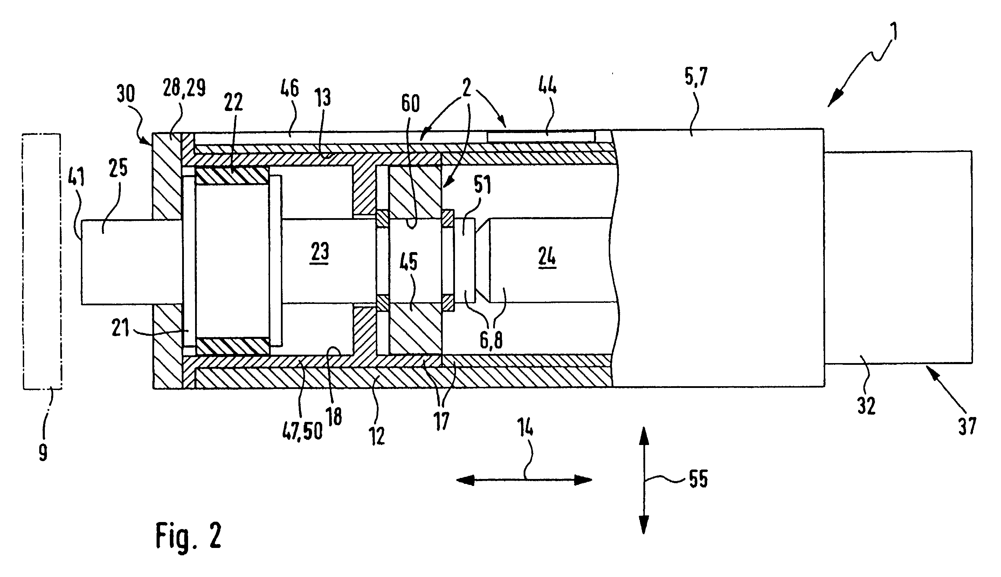

In Figur 2 befinden sich das Feldbeeinflussungsteil 47 und der Magnet 45 in der nichtschaltenden Relativposition, wobei der Betätigungsstößel 6 seine vollständig ausgefahrene Position einnimmt, so daß sich die Stoßdämpfereinrichtung 1 in der Ruhelage befindet. In dieser Position umgibt das Feldbeeinflussungsteil 47 den Magneten 45 in Umfangsrichtung 52 vollständig, so daß das Feldbeeinflussungsteil 47 sozusagen ein hülsenähnliches Abschirmteil bildet. Das Magnetfeld des in Form eines Permanentmagneten ausgeführten Ringmagneten wird in der nichtschaltenden Relativposition zumindest im Bereich des Sensors 44 geschwächt. Seine Feldstärke liegt im Bereich des Sensors unterhalb des Schaltwertes, so daß eine Betätigung des Sensors 44 nicht erfolgen kann. Dies ist darauf zurückzuführen, daß sich das Magnetfeld des Magneten 45 in der nichtschaltenden Relativposition nicht ungehindert ausbreiten kann. Durch das Feldbeeinflussungsteil 47 wird das Magnetfeld abgelenkt bzw. im Feldbeeinflussungsteil 47 selbst gebündelt, so daß eine Ausbreitung bzw. Ausdehnung des Magnetfeldes mit einer über dem Schaltwert liegenden Feldstärke im Bereich des Sensors 44 verhindert ist.

Beim Ausführungsbeispiel ist die Feldstärke des Magnetfeldes im Bereich des Sensors 44 aufgrund der guten Abschirmung des Feldbeeinflussungsteils 47 in der nichtschaltenden Relativposition vernachlässigbar gering, es sei jedoch nochmals betont, daß eine Absenkung der Feldstärke unter den Schaltwert ausreicht.

Das Feldbeeinflussungsteil 47 ist beim Ausführungsbeispiel in der nichtschaltenden Relativposition zumindest teilweise zwischen dem Sensor 44 und dem Magneten 45 angeordnet. Abhängig von den jeweiligen konstruktiven Gegebenheiten, die die Feldstärke des Magnetfeldes im Bereich des Sensors 44 beeinflussen, sind allerdings auch andere Zuordnungen denkbar. Mögliche Einflußparameter sind beispielsweise die Polarisierungsrichtung des Magneten 45 (axial oder radial), Material und Dimensionierung des Feldbeeinflussungsteils 47 oder der Abstand zwischen Magnet 45 und Feldbeeinflussungsteil 47 in der nichtschaltenden Relativposition.

Desweiteren könnte das Feldbeeinflussungsteil 47 in einer alternativen Ausführungsform der Positionserfassungsvorrichtung 2 auch eine andere als die im ersten Ausführungsbeispiel gezeigte hülsenähnliche Form besitzen. Es könnte beispielsweise eine plattenähnliche, in Umfangsrichtung 52 gebogene Form besitzen und an der Innenseite des Gehäuses 5 befestigt sein. In der nichtschaltenden Relativposition könnte es dann derart angeordnet sein, daß es den Magneten 45 in Umfangsrichtung 52 teilweise umgibt und dabei zumindest teilweise zwischen dem Sensor 44 und dem Magneten 45 angeordnet ist. Liegt eine andere als die im Beispiel vorgesehen zylinderförmige Bauform des Gehäuses 5 vor, so kann die Form des Feldbeeinflussungsteiles 47 entsprechend angepaßt werden. Ganz allgemein kann man sagen, daß in der nichtschaltenden Relativposition das Feldbeeinflussungsteil 47 und der Magnet 45 jedenfalls derart relativ zueinander angeordnet sind, daß aufgrund der Bündelung bzw. Ablenkung des Magnetfeldes im bzw. durch das Feldbeeinflussungsteil 47 die Feldstärke des Magnetfeldes im Bereich des Sensors 44 unter den Schaltwert herabgesetzt ist.

Wird der Betätigungsstößel 6 durch eine Krafteinwirkung, beispielsweise durch Auftreffen eines bewegten Teils auf den Betätigungsabschnitt 25 in Längsrichtung 14 in Richtung der eingefahrenen Position bewegt, so wird der Magnet 45 ebenfalls in Längsrichtung 14 bezüglich des von einem Längenabschnitt 50 der Führungshülse 17 gebildeten Feldbeeinflussungsteils 47 verschoben, bis die in Figur 3 abgebildete, zu erfassende Relativposition der beiden Körper 7, 8 vorliegt. Der Magnet 45 ist hierbei vollständig aus dem hülsenartigen Feldbeeinflussungsteil 47 in Längsrichtung 14 herausbewegt, so daß sich sein Magnetfeld in Radialrichtung 55 und auf seiner dem Feldbeeinflussungsteil 47 entgegengesetzten Axialseite 56 im wesentlichen ungehindert ausbreiten kann. Somit stellt sich im Bereich des Sensors 44 eine oberhalb des Schaltwertes oder zumindest eine diesem entsprechende Feldstärke des Magnetfeldes ein, wodurch der Sensor 44 betätigt wird. Der vom Betätigungsstößel 6 gebildete zweite Körper 8 und der vom Gehäuse 5 gebildete erste Körper 7 befinden sich hierbei in der schaltenden Relativposition.

Bei der ersten Ausführungsform ist der Magnet 45 ständig mit dem zweiten Körper 8 bewegungsgekoppelt. Es wäre in einer weiteren Ausgestaltung der Positionserfassungsvorrichtung 2 ebenfalls möglich, daß der Magnet 45 lediglich beim Übergang zwischen der nichtschaltenden und der schaltenden Relativposition mit dem zweiten Körper 8 bewegungsgekoppelt ist. Beispielsweise könnte man sich vorstellen, daß der zweite Körper 8 über eine Art Mitnahmeelement verfügt, das erst im Umschaltbereich zwischen nichtschaltender und schaltender Relativposition mit dem Magneten 45 zusammenarbeitet und hierdurch die Relativbewegung zwischen Magnet 45 und dem Feldbeeinflussunsteil 47 hervorruft.

Die Empfindlichkeit der erfindungsgemäßen Positionserfassungsvorrichtung 2 gegenüber Streuungen des Magnetfeldes ist wesentlich geringer als bei seither bekannten Positionserfassungsvorrichtungen, da in der nichtschaltenden Relativposition eine relativ starke Bündelung des Magnetfeldes im Feldbeeinflussungsteil 47 stattfindet, so daß Streuungen des Magnetfeldes, die eine ungewollte Betätigung des Sensors 44 auslösen können, vermieden sind. Erst wenn Magnet 45 und Feldbeeinflussungsteil 47 die schaltende Relativposition einnehmen, ist im Bereich des Sensors 44 ein ausreichend starkes Magnetfeld vorhanden, das eine Betätigung des Sensors 44 hervorruft.

Wie aus Figur 3 ersichtlich ist, ist der Magnet 45 in der schaltenden Relativposition in Längsrichtung 14 vollständig außerhalb des hülsenförmigen Feldbeeinflussungsteiles 47 angeordnet. Es versteht sich, daß das Feldbeeinflussungsteil 47 den Magneten 45 auch in der schaltenden Relativposition in Umfangsrichtung 52 noch teilweise umgeben könnte, falls im Bereich des Sensors 44 eine mindestens dem Schaltwert entsprechende Feldstärke des Magnetfeldes gewährleistet ist, so daß dessen Betätigung erfolgt. Dies hängt insbesondere von der konkreten Bauweise des Feldbeeinflussungsteils 47 und des Magneten 45 ab.

Die zweite, nicht beanspruchte Ausführungsform der Positionserfassungsvorrichtung 2 ist in den Figuren 4 und 5 dargestellt, wobei die Bezugsziffern des ersten Ausführungsbeispiels beim zweiten Ausführungsbeispiel entsprechend verwendet sind.

Wie auch bei der ersten Ausführungsform ist der Magnet 45 als Ringmagnet ausgeführt und koaxial zum Betätigungsstößel 6 angeordnet, wobei er entgegen der ersten Ausführungsform nunmehr gehäusefest und zweckmäßigerweise an der Innenseite des Gehäuses 5 befestigt ist. Der Magnet 45 ist daher ortsfest zum Sensor 44 und zum vom Gehäuse 5 gebildeten zweiten Körper 8 angeordnet.

Das Feldbeeinflussungsteil 47 ist von einem Längenabschnitt des Betätigungsstößels 6 gebildet, wobei es sich im vorliegenden Fall um das zweite Stößelelement 24 handelt.

Es besteht die Möglichkeit das Feldbeeinflussungsteil 47 in einer nicht näher dargestellten Ausführungsform bewegungsgekoppelt mit dem zweiten Körper 8 auszubilden, wobei es ständig oder lediglich im Übergang zwischen der nichtschaltenden und der schaltenden Relativposition mit dem zweiten Körper 8 bewegungsgekoppelt sein kann, so daß eine Relativbewegung zwischen Feldbeeinflussungsteil 47 und dem bei der zweiten Ausführungsform bezüglich des ersten Körpers 7 ortsfesten Magneten 45 hervorgerufen wird. Beispielsweise könnte das Feldbeeinflussungsteil 47 als separates Bauteil mit dem Betätigungsstößel 6 bewegungsgekoppelt sein oder ortsfest an diesem sitzen.

In Figur 4 ist die nichtschaltende Relativposition von Magnet 45 und Feldbeeinflussungsteil 47 dargestellt, wobei sich die Stoßdämpfereinrichtung 1 in der Ruhestellung mit vollständig ausgefahrenem Betätigungsstößel 6 befindet.

Das zylinderähnliche Feldbeeinflussungsteil 47 greift in dieser nichtschaltenden Relativposition gemäß Figur 4 in die zentrale Öffnung 60 des als Ringmagneten ausgebildeten Magneten 45 ein, wobei es beispielsgemäß vollständig hindurchragt. In dieser Stellung wird das Magnetfeld des Magneten 45 im Feldbeeinflussungsteil 47 gebündelt, wodurch sich eine Schwächung der Feldstärke zumindest auf der dem Feldbeeinflussungsteil 47 radial entgegengesetzten Seite des Magneten 45, also auch im Bereich des Sensors 44, ergibt. Die Feldstärke des Magnetfeldes kann auf diese Weise im Bereich des Sensors 44 unterhalb des Schaltwertes gehalten werden.

Analog zum ersten Ausführungsbeispiel der Positionserfassungsvorrichtung 2 wird in der nichtschaltenden Relativposition eine Bündelung bzw. Ablenkung des Magnetfeldes bewirkt, wobei im magnetisierbaren Feldbeeinflussungsteil 47 ein Magnetfeld größerer Feldstärke vorliegt als außerhalb des Feldbeeinflussungsteils 47. Der Magnet 45 ist in der nichtschaltenden Relativposition beim zweiten Ausführungsbeispiel der Positionserfassungsvorrichtung 2 ganz oder teilweise zwischen dem Feldbeeinflussungsteil 47 und dem Sensor 44 angeordnet.

Zur Feldschwächung des Magnetfeldes in der nichtschaltenden Relativposition im Bereich des Sensors 44 könnte das Feldbeeinflussungsteil 47 auch nur teilweise in die Öffnung 60 des Magneten 45 hineinragen oder dieser lediglich in Längsrichtung 14 angenähert sein, falls dadurch die Feldstärke im Bereich des Sensors 44 unterhalb des Schaltwertes gehalten werden kann.

Wird der Betätigungsstößel 6 ausgehend von der in Figur 4 dargestellten Ruhestellung in Richtung seiner eingefahrenen Position bewegt, so werden der Magnet 45 und das Feldbeeinflussungsteil 47 von der nichtschaltenden in die in Figur 5 gezeigte schaltende Relativposition übergeführt, wobei das Feldbeeinflussungsteil 47 aus dem Ringmagneten hinausgeschoben wird.

Beim Ausführungsbeispiel ist das vom zweiten Stößelelement 24 gebildete Feldbeeinflussungsteil in der schaltenden Relativposition in Längsrichtung 14 zum Magneten 45 beabstandet, so daß es nicht in die Öffnung 60 des Magneten 45 hineinragt. Dadurch kann sich das Magnetfeld zumindest im Bereich des Sensors 44 mit einer mindestens dem Schaltwert entsprechenden Feldstärke aufbauen bzw. ausdehnen.

In der schaltenden Relativposition von Magnet 45 und Feldbeeinflussungsteil 47 ist lediglich zu gewährleisten, daß im Bereich des Sensors 44 ein Magnetfeld vorliegt, dessen Feldstärke mindestens dem Schaltwert des Sensors 44 entspricht. Welche tatsächliche Relativposition der Magnet 45 und das Feldbeeinflussungsteil 47 hierbei zueinander einnehmen, ist grundsätzlich beliebig, so daß das Feldbeeinflussungsteil 47 auch teilweise in die Öffnung 60 des Magneten 45 eingreifen könnte.

Die Stoßdämpfereinrichtung 1 bildet zusammen mit der Positionserfassungsvorrichtung 2 bei beiden Ausführungsbeispielen eine Baueinheit. Dies hat den Vorteil, daß beim Ummontieren der Baueinheit die Sensorjustierung der Positionserfassungsvorrichtung 2 erhalten bleibt, so daß eine Neujustierung des Sensors 44 entfallen kann. Aufgrund der Vorgabe des Radialabstandes zwischen Magnet 45 und Nut 46 durch das erste Gehäuseteil 12 des Gehäuses 5 arbeitet die Positionserfassungsvorrichtung 2 unabhängig vom verwendeten Stoßdämpfer 37. Die Erfassung einer Relativposition und somit auch die Justierung des Sensors 44 ist daher unabhängig vom eingesetzten Stoßdämpfer. Auch eine Veränderung des Stoßdämpferhubes erfordert keine Neujustierung.

Ein weiterer Vorteil der Baueinheit ist neben dem kostengünstigen Aufbau die Tatsache, daß sich bezüglich des bewegten Teils 9 selbst eine unmittelbare Positionserfassung erübrigt. Beim Einsatz der beispielsgemäßen Stoßdämpfereinrichtung 1 übernimmt diese gleichzeitig sowohl das Abbremsen des bewegten Teiles 9 als auch dessen Positionserfassung.

Es ist möglich, Teile beider Ausführungsbeispiele der Positionserfassungsvorrichtung 2 zu kombinieren und dadurch weitere Abwandlungen der beschriebenen Ausführungsvarianten zu erhalten. So könnte beispielsweise ein gemäß des zweiten Ausführungsbeispiels bezüglich des Sensors 44 ortsfester Magnet 45 und ein relativ zum Magneten 45 bewegbares Feldbeeinflussungsteil 47 vorgesehen sein, das eine der ersten Ausführungsform der Positionserfassungsvorrichtung 2 entsprechende Gestalt besitzt.

## Patentansprüche

1. Positionserfassungsvorrichtung zur Erfassung wenigstens einer Relativposition zweier Körper (7, 8), mit wenigstens einem ortsfest bezüglich des einen Körpers (7) angeordneten Sensor (44), der bei in der zu erfassenden Relativposition befindlichen Körpern (7, 8) durch das Magnetfeld eines Magneten (45) betätigt wird, wobei mindestens ein Feldbeeinflussungsteil (47) vorgesehen ist, wobei das Feldbeeinflussungsteil (47) und der Magnet (45) relativ zueinander bewegbar sind und durch die Relativbewegung der beiden Körper (7, 8) zwischen einer nichtschaltenden und einer schaltenden Relativposition verlagerbar sind, wobei das Feldbeeinflussungsteil (47) in der nichtschaltenden Relativposition zumindest teilweise zwischen dem Sensor (44) und dem Magneten (45) angeordnet ist und derart im Magnetfeld des Magneten (45) angeordnet ist, dass die Feldstärke des Magnetfeldes im Bereich des Sensors (44) unter einen dessen Betätigung hervorrufenden Schaltwert herabgesetzt ist, während es in der schaltenden Relativposition im Bereich des Sensors (44) eine mindestens dem Schaltwert entsprechende Feldstärke zulässt, **dadurch gekennzeichnet, dass** das Feldbeeinflussungsteil (47) ein hülsenähnliches Abschirmteil darstellt, das den Magneten (45) in der nichtschaltenden Relativposition umgibt.

2. Positionserfassungsvorrichtung nach Anspruch 1, **dadurch gekennzeichnet, dass** das Feldbeeinflussungsteil (47) magnetisierbar ist und insbesondere aus ferromagnetischem Material besteht.

3. Positionserfassungsvorrichtung nach Anspruch 1 oder 2, **dadurch gekennzeichnet, dass** das Feldbeeinflussungsteil (47) zumindest beim Übergang zwischen der nichtschaltenden und der schaltenden Relativposition mit einem der Körper (8) bewegungsgekoppelt ist.

4. Positionserfassungsvorrichtung nach einem der Ansprüche 1 bis 3, **dadurch gekennzeichnet, dass** der Magnet (45) zumindest beim Übergang zwischen der schaltenden und der nichtschaltenden Relativposition mit einem der Körper (8) bewegungsgekoppelt ist.

5. Positionserfassungsvorrichtung nach einem der Ansprüche 1 bis 4, **dadurch gekennzeichnet, dass** das Feldbeeinflussungsteil (47) und/oder der Magnet (45) ortsfest an einem der beiden Körper (7, 8) angeordnet sind bzw. ist.

6. Positionserfassungsvorrichtung nach einem der Ansprüche 1 bis 5, **dadurch gekennzeichnet, dass** der Magnet (45) ortsfest bezüglich des Sensors (44) angeordnet ist.

7. Positionserfassungsvorrichtung nach einem der Ansprüche 1 bis 5, **dadurch gekennzeichnet, dass** das Feldbeeinflussungsteil (47) ortsfest bezüglich des Sensors (44) angeordnet ist.

8. Positionserfassungsvorrichtung nach einem der Ansprüche 1 bis 7, **dadurch gekennzeichnet, dass** das hülsenähnliche Feldbeeinflussungsteil (47) den Magneten (45) in der nichtschaltenden Relativposition koaxial zur Bewegungsrichtung der Relativbewegung umgibt.

9. Positionserfassungsvorrichtung nach einem der Ansprüche 1 bis 8, **dadurch gekennzeichnet, dass** der Magnet (45) von einem Ringmagneten gebildet ist.

10. Positionserfassungsvorrichtung nach einem der Ansprüche 1 bis 9, **dadurch gekennzeichnet, dass** der eine Körper (7) vom Gehäuse und der andere Körper (8) vom relativ zum Gehäuse bewegbaren Antriebsteil einer Antriebseinrichtung, beispielsweise eines fluidbetätigten Arbeitszylinders, gebildet ist.

11. Positionserfassungsvorrichtung nach Anspruch 10, **dadurch gekennzeichnet, dass** die wenigstens eine zu erfassende Relativposition der beiden Körper (7, 8) eine Endlage des Antriebsteils bezüglich des Gehäuses darstellt.

12. Positionserfassungsvorrichtung nach einem der Ansprüche 1 bis 11, **dadurch gekennzeichnet, dass** der eine Körper vom Gehäuse (5) und der andere Körper von einem Betätigungsstößel (6) einer Stoßdämpfereinrichtung (1) gebildet ist.

13. Positionserfassungsvorrichtung nach Anspruch 12, **dadurch gekennzeichnet, dass** der Betätigungsstößel (6) in zwei axial aufeinanderfolgend angeordnete Stößelelemente (23, 24) unterteilt ist, von denen das eine (24) das Feldbeeinflussungsteil (47) bildet.

14. Positionserfassungsvorrichtung nach einem der Ansprüche 10 bis 13, **dadurch gekennzeichnet, dass** der Sensor (44) außen am Gehäuse (5) angeordnet ist.

15. Positionserfassungsvorrichtung nach einem der Ansprüche 10 bis 14, **dadurch gekennzeichnet, dass** der Magnet (45) an der Innenseite des Gehäuses (5) befestigt ist.

16. Positionserfassungsvorrichtung nach einem der Ansprüche 10 bis 14, **dadurch gekennzeichnet, dass** der Magnet (45) am Antriebsteil bzw. am Betätigungsstößel (6) befestigt ist.

17. Positionserfassungsvorrichtung nach einem der Ansprüche 10 bis 16 in Verbindung mit Anspruch 8, **dadurch gekennzeichnet, dass** der Ringmagnet koaxial zum Antriebsteil bzw. zum Betätigungsstößel (6) angeordnet ist.

18. Positionserfassungsvorrichtung nach einem der Ansprüche 10 bis 17, **dadurch gekennzeichnet, dass** das Feldbeeinflussungsteil (47) an der Innenseite des Gehäuses (5) der Antriebseinrichtung bzw. der Stoßdämpfereinrichtung (1) angeordnet ist.

## Claims

1. Position detection device for detecting at least one relative position between two bodies (7, 8), with at least one sensor (44) in a fixed location in relation to the one body (7) and actuated by the magnetic field of a magnet (45) when the bodies (7, 8) are in the relative position to be detected, whereby at least one field modulating element (47) is provided, the field modulating element (47) and the magnet (45) being movable relative to one another and capable of being shifted between a non-switching and a switching relative position by the relative movement of the two bodies (7, 8), whereby the field modulating element (47) is at least partially located between the sensor (44) and the magnet (45) in the non-switching relative position and lies in the magnetic field of the magnet (45) in such a way that the field strength of the magnetic field in the area of the sensor (44) is reduced below a switching value which would initiate its actuation, while allowing a field strength at least equal to the switching value in the area of the sensor (44) in the switching relative position, **characterised in that** the field modulating element (47) is a sleeve-like shielding element surrounding the magnet (45) in the non-switching relative position.

2. Position detecting device according to claim 1, **characterised in that** the field modulating element (47) is magnetisable and consists of a ferromagnetic material in particular.

3. Position detecting device according to claim 1 or 2, **characterised in that** the field modulating element (47) is coupled for movement with one of the bodies (8) at least in the transition between the non-switching and the switching relative position.

4. Position detecting device according to any of claims 1 to 3, **characterised in that** the magnet (45) is coupled for movement with one of the bodies (8) at least in the transition between the non-switching and the switching relative position.

5. Position detecting device according to any of claims 1 to 4, **characterised in that** the field modulating element (47) and/or the magnet (45) are/is in a fixed location on one of the two bodies (7, 8).

6. Position detecting device according to any of claims 1 to 5, **characterised in that** the magnet (45) is in a fixed location in relation to the sensor (44).

7. Position detecting device according to any of claims 1 to 5, **characterised in that** the field modulating element (47) is in a fixed location in relation to the sensor (44).

8. Position detecting device according to any of claims 1 to 7, **characterised in that** the sleeve-like field modulating element (47) surrounds the magnet (45) coaxial with the direction of the relative movement in the non-switching relative position.

9. Position detecting device according to any of claims 1 to 8, **characterised in that** the magnet (45) is represented by an annular magnet.

10. Position detecting device according to any of claims 1 to 9, **characterised in that** the one body (7) is represented by the housing and the other body (8) is represented by the drive part of a drive unit, for instance of a fluid-operated cylinder, which is movable relative to the housing.

11. Position detection device according to claim 10, **characterised in that** the at least one relative position of the two bodies (7, 8) to be detected represents an end position of the drive part relative to the housing.

12. Position detection device according to any of claims 1 to 11, **characterised in that** the one body is represented by the housing (5) and the other body is represented by an operating plunger (6) of a shock absorber unit (1).

13. Position detection device according to claim 12, **characterised in that** the operating plunger (6) is divided into two axially consecutive plunger elements (23, 24), one (24) of which represents the field modulating element (47).

14. Position detecting device according to any of claims 10 to 13, **characterised in that** the sensor (44) is mounted on the outside of the housing (5).

15. Position detecting device according to any of claims 10 to 14, **characterised in that** the magnet (45) is attached to the inside of the housing (5).

16. Position detecting device according to any of claims 10 to 14, **characterised in that** the magnet (45) is attached to the drive part or to the operating plunger (6) respectively.

17. Position detecting device according to any of claims 10 to 16 in combination with claim 8, **characterised in that** the annular magnet is arranged coaxial with the drive part or the operating plunger (6) respectively.

18. Position detecting device according to any of claims 10 to 17, **characterised in that** the field modulating element (47) is arranged on the inside of the housing (5) of the drive unit or the shock absorber unit (1) respectively.

## Revendications

1. Dispositif de détection de position pour détecter au moins une position relative de deux corps (7, 8), comportant au moins un capteur (44) disposé en un emplacement fixe par rapport à un corps (7), lequel capteur est actionné, lorsque les corps (7, 8) se trouvent dans la position relative à détecter, par le champ magnétique d'un aimant (45), au moins une pièce d'action sur le champ (47) étant prévue, la pièce d'action sur le champ (47) et l'aimant (45) étant déplaçables l'un par rapport à l'autre et déplaçables, par le mouvement relatif des deux corps (7, 8) entre une position relative de non-commutation et une position relative de commutation, la pièce d'action sur le champ (47) étant disposée, dans la position relative de non-commutation, au moins en partie entre le capteur (44) et l'aimant (45), et disposée dans le champ magnétique de l'aimant (45) de manière que l'intensité du champ magnétique soit abaissée, dans la zone du capteur (44), au-dessous d'une valeur de commutation provoquant son actionnement, tandis que dans la position relative de commutation, dans la zone du capteur (44), elle autorise une intensité de champ correspondant au moins à la valeur de commutation, **caractérisé en ce que** la pièce d'action sur le champ (47) constitue une pièce de blindage du type manchon, qui entoure l'aimant (45) dans la position relative de non-commutation.

2. Dispositif de détection de position selon la revendication 1, **caractérisé en ce que** la pièce d'action sur le champ (47) est magnétisable et est constituée en particulier en matériau ferromagnétique.

3. Dispositif de détection de position selon la revendication 1 ou 2, **caractérisé en ce que** la pièce d'action sur le champ (47) est couplée en déplacement avec l'un des corps (8), au moins au passage entre la position relative de non-commutation et la position de commutation.

4. Dispositif de détection de position selon l'une des revendications 1 à 3, **caractérisé en ce que** l'aimant (45) est couplé en déplacement avec l'un des corps (8), au moins au passage entre la position relative de commutation et la position relative de non-commutation.

5. Dispositif de détection de position selon l'une des revendications 1 à 4, **caractérisé en ce que** la pièce d'action sur le champ (47) et/ou l'aimant (45) sont ou est disposé en un emplacement fixe sur l'un des deux corps (7, 8).

6. Dispositif de détection de position selon l'une des revendications 1 à 5, **caractérisé en ce que** l'aimant (45) est disposé en un emplacement fixe par rapport au capteur (44).

7. Dispositif de détection de position selon l'une des revendications 1 à 5, **caractérisé en ce que** la pièce d'action sur le champ (47) est disposée en un emplacement fixe par rapport au capteur (44).

8. Dispositif de détection de position selon l'une des revendications 1 à 7, **caractérisé en ce que** la pièce d'action sur le champ (47) de type manchon entoure l'aimant (45) dans la position relative de non-commutation, coaxialement à la direction de déplacement du mouvement relatif.

9. Dispositif de détection de position selon l'une des revendications 1 à 8, **caractérisé en ce que** l'aimant (45) est formé par un aimant annulaire.

10. Dispositif de détection de position selon l'une des revendications 1 à 9, **caractérisé en ce qu'**un corps (7) est formé par le boîtier et l'autre corps (8) par la partie motrice déplaçable par rapport au boîtier, d'un dispositif d'entraînement, par exemple d'un vérin actionné par un fluide.

11. Dispositif de détection de position selon la revendication 10, **caractérisé en ce que** la au moins une position relative à détecter des deux corps (7, 8) constitue une position de fin de course de la partie motrice par rapport au boîtier.

12. Dispositif de détection de position selon l'une des revendications 1 à 11, **caractérisé en ce qu'**un corps est formé par le boîtier (5) et l'autre corps par un poussoir d'actionnement (6) d'un dispositif amortisseur de chocs (1).

13. Dispositif de détection de position selon la revendication 12, **caractérisé en ce que** le poussoir d'actionnement (6) est divisé en deux éléments de poussoir (23, 24) disposés l'un derrière l'autre axialement, dont un (24) forme la pièce d'action sur la champ (47).

14. Dispositif de détection de position selon l'une des revendications 10 à 13, **caractérisé en ce que** le capteur (44) est disposé à l'extérieur sur le boîtier (5).

15. Dispositif de détection de position selon l'une des revendications 10 à 14, **caractérisé en ce que** l'aimant (45) est fixé sur la face intérieure du boîtier (5).

16. Dispositif de détection de position selon l'une des revendications 10 à 14, **caractérisé en ce que** l'aimant (45) est fixé à la partie motrice ou au poussoir d'actionnement (6).

17. Dispositif de détection de position selon l'une des revendications 10 à 16, en combinaison avec la revendication 8, **caractérisé en ce que** l'aimant annulaire est disposé coaxialement à la partie motrice ou au poussoir d'actionnement (6).

18. Dispositif de détection de position selon l'une des revendications 10 à 17, **caractérisé en ce que** la pièce d'action sur le champ (47) est disposée sur la face intérieure du boîtier (5) du dispositif d'entraînement ou du dispositif amortisseur de chocs (1).
